# EUROPEAN PATENT SPECIFICATION

(11) **EP 3 213 044 B1**
(45) Date of publication and mention of the grant of the patent: **02.01.2019**
(21) Application number: 15819902.6
(22) Date of filing: 28.10.2015
(51) Int. Cl.: G01K 13/00, G01W 1/17, G01K 7/42

(54) **AN OPERATIVE TEMPERATURE MEASURING DEVICE**
BETRIEBSTEMPERATURMESSER
DISPOSITIF DE MESURE DE LA TEMPÉRATURE OPÉRATIVE

(30) Priority: 31.10.2014 TR 201412778
(43) Date of publication of application: 06.09.2017
(73) Proprietor: Evren, Fatih, 06020 Ankara (TR); Kilkis, Birol, 06530 Ankara (TR)
(72) Inventor: Evren, Fatih, 06020 Ankara (TR); Kilkis, Birol, 06530 Ankara (TR)
(74) Representative: Inal, Aysegul Seda
(86) International application number: PCT/TR2015/050153
(87) International publication number: WO 2016/068824

(56) References cited:
- CN-A- 101 191 746
- CN-U- 203 732 179
- JP-A- 2001 272 284
- US-A- 4 747 699

## Description

### Technical Field Related to the Invention

The invention subject to the application is related to a practical and applicable operative measuring device that can carry out operative temperature (thermal comfort temperature) measurement which is defined as the basic comfort temperature in the ASHRAE (American Society of Heating, Refrigerating and Air Conditioning Engineers) thermal comfort design diagram but is still not applied and is ignored, wherein said device plays an important role in the conditioning of internal environments, and which carries in the most sensitive and comprehensive way the thermal interaction of the human body with its surroundings, and considers the temperature reactions of the human body and which can evaluate the energy losses of the human body.

### Known State of the Art related to the I nvention (Prior Art)

The present devices or probes that are known as operative measuring devices in the known state of the art cannot perform the active simulation of the human body thermodynamically. Such devices which are low in number have been designed for laboratory usage and they are not suitable to be used in a room. Moreover according to the measurement method used in these devices, the clothes of the person, position of the person, if a person is sweating or not, the person's activity status, are not included in any way in the measurement.

Operative temperature in the known state of the art; can be measured by means of the MRT (Mean Radiant Temperature) obtained using values measured with a Black Globe Probe and anemometer and combination of air temperature at certain ratios. However in this method clothing, seating, and activity parameters are not included during measurement. Moreover the usage of this method is only suitable for thermal comfort test measurements or laboratories and the thermal characteristics of the human body cannot be simulated and passive measurement can be taken which is independent from human characteristics but is only calculative. The cost of said system a quite high.

As these operative temperature measuring devices that are included in the known state of the art, are laboratory type, high priced devices, they are not suitable to be used as room type operative temperature thermostats in buildings. For this reason, heating and cooling systems which perform very limited measuring that do not take into consideration the position of a person in a room, clothing, activity status, sweating and the surface temperatures of walls or windows etc. which effect the heat transfer of people and only measure the air temperature and are known in building automation systems are being used. This leads to energy loss and subjective human discomfort. Whereas in order to provide precise human comfort, human exergy loss has gained importance in addition to human energy loss and it has been understood that providing human exergy comfort with operative temperature measurement devices is now an indispensible necessity. Thus, ASHRAE (American Society of Heating, Refrigerating and Air Conditioning Engineers) comfort diagram is denominated as operative temperature and in application this value has been simplified as air temperature. This simplification however leads to subjective comfort losses together with economic and environmental losses. Moreover as radiant comfort size cannot be correctly measured the air in the environment is trying to be heated and cooled more and unnecessary energy waste is caused.

The invention subject to the American Patent numbered US 4,863,279 A can be used as an example of operative temperature measurement devices and methods, within the known state of the art.

US4747699 discloses a thermal-environment sensor with means to simulate emissivity of human body.

### Brief Description of the Invention and its Aims

Human body and the thermal interaction of human body with enclosure in the invention has been actively simulated. The human periphery and its thermal transaction has been simulated on a mini human model by using thermal balancing models known in the state of the art. The human mannequin was given a body pose (sitting, standing up etc.) and the position, clothing and activity level (summer and winter clothing, person sitting in an office, person working in a factory etc.) and sweating conditions have been indirectly simulated.

An ellipsoid geometry which can represent a human body as sensor geometry in an operative temperature measurement device subject to the invention has been used. Moreover an electric micro heater has been mounted inside the sensor in order to represent the metabolic heat consumption of a human body; the inside of the geometry was filled with a fluid which can reflect the average specific temperature and the equivalent density of inner body fluids and human inner organs.

The following has been aimed in developing the operative temperature measuring device subject to the invention;
- Obtaining an operative temperature measuring device which is suitable to be used in a room both by means of its price, practicality, remote control and remote monitoring characteristics, and by the structure of the device which can measure operative temperature directly as if a person is feeling it and sensitively by acting like a human body;
- Taking measurements by simulating the thermal interaction of the human body and its periphery in a much more realist and dynamic medium,
- Increasing the thermal comfort measurement in houses and offices to the required level,
- Putting a product on the market for the first time which can particularly take the exergy losses of the human body in Low-Energy and Low-Exergy buildings into consideration and in turn can enable the monitoring of low exergy buildings and which can contribute to special automation,
- Producing a device which can be used in automation in order to reduce exergy losses and increase energy saving.

### Description of the Figures illustrating the Invention

The figures that have been prepared in order to further describe the operative temperature measuring device developed according to the invention have been defined below.

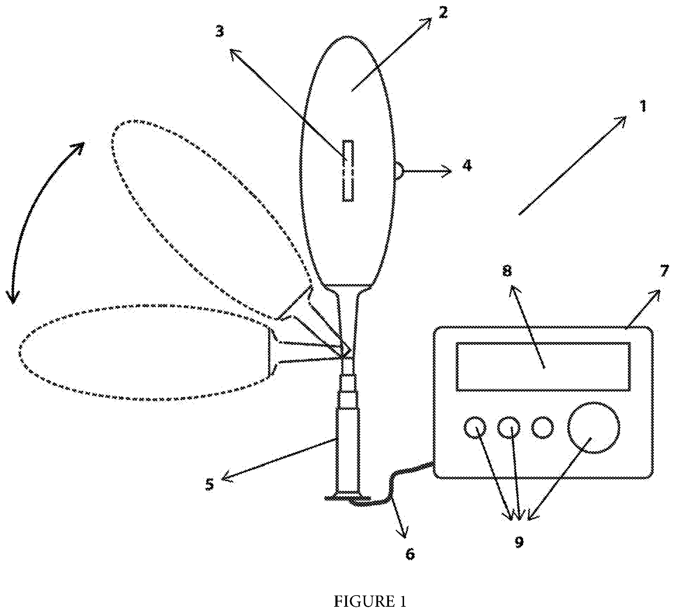

Figure 1- is the general view of the operative temperature measurement device.

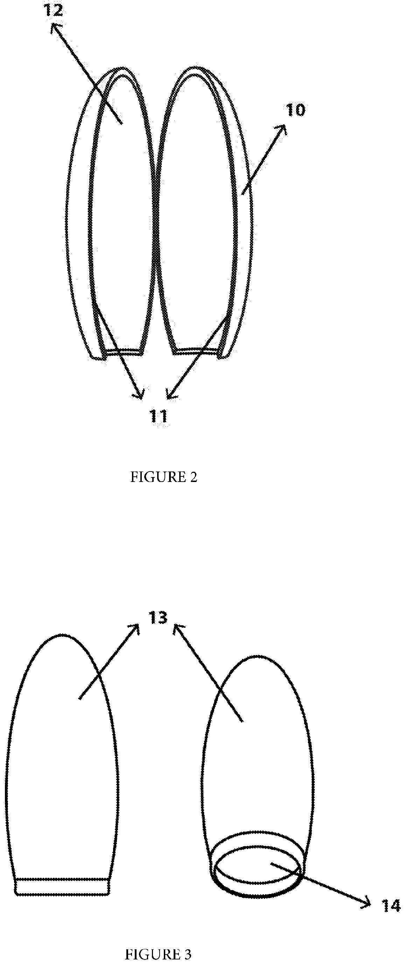

Figure 2- is the general view of the type 1 shell
Figure 3 - is the general view of the type 2 shell

### Definition of the aspects/ sections/ parts forming the invention

The parts/sections/aspects that have been illustrated in the figures that have been prepared in order to further describe the operative temperature measuring device developed by means of this invention have each been numbered and the references of each number have been listed below.
1. Operative temperature measurement device
2. Ellipsoid sensor
3. Electric micro heater
4. Surface temperature sensor
5. Telescopic leg
6. Data and power transfer cable
7. Electronic control unit
8. Screen
9. Control panel
10. Type 1 shell
11. Confluence point
12. Type 1 shell inner surface
13. Type 2 shell
14. Type 2 shell inner surface

### Detailed description of the invention

An ellipsoid geometry which can represent the human body as sensor (2) geometry in the operative temperature measuring device (1) subject to the invention which can be used in operative temperature measurement which is an important factor in conditioning internal environment and which is dependent on the thermal interaction of the human body with its periphery. Moreover the inner section of the ellipsoid sensor (2), has been filled with a fluid which can reflect the average specific temperature and the equivalent density of the internal organs and inner body fluids of human beings.

The operative temperature measuring device (1) basically comprises;
- A two piece ellipsoid sensor (2) which provides the simulation of the thermal characteristics of a human and the material and surface characteristics used besides simulating the human body geometry,
- At least an electric micro heater (3) which enables the simulation of the metabolic temperature that the human body consumes during the thermal interaction of the human body with its periphery,
- At least a surface temperature sensor (4) which measures surface temperature, and which can be placed onto one or more points on the ellipsoid sensor (2) and enables the measurement that is required in order to keep the temperature at fixed values that have been determined for different conditions,

- At least one telescopic leg (5) which enables the adjustment of the distance and angle between the sensor and the surface it is mounted on,
- At least a data and power transfer cable (6) formed of two different sections that perform power transfer and data transfer functions,
- An electronic control unit (7), which operates such that it can read the data received from the surface temperature sensor (4) and can control the electric micro heater (4), can obtain the operative temperature value by assigning the power data into the mathematical model and the obtained equations, and which can not only show these values on a screen (8) but can also transfer said values to a building automation system via wired and wireless communication protocols,
- A screen (8) located on the electronic control unit (7) which shows the room type control parameters and other control parameters,
- A control panel (9) which enables the adjustment of room type control parameters and other control parameters by means of the menu of the electronic control unit (7),
- A type 1 shell (10) formed of different thicknesses, materials and surfaces, which enable to carry out different sweating and clothing simulation by means of its structure that can be attached to and detached from the ellipsoid sensor (2), formed of a multi part structure comprising two or more slices that have been joined together by sewing or with any other kind of technique.
- A confluence point (11) which enable the joining of the parts of the two part, type 1 shell (10) and which travels the periphery of parts end to end,
- An inner surface of a type 1 shell (12) where the surfaces of the type 1 shell and the ellipsoid sensor (2) surfaces contact each other
- A type 2 shell (13) having a single part structure produced from a flexible textured material mounted on an ellipsoid sensor (2),
- A type 2 shell inner surface (14) where the surfaces of the type 2 shell and the ellipsoid sensor (2) contact each other.

The surface temperature sensor (4) submits the measurement data via the data and power transfer cable (6) to the electronic control unit (7).

The power drawn by the electric micro heater (3) is different according to environmental conditions and it is dependent on operative temperature and for this reason when required, the power that is necessary for the micro heater (3) to operate (3) is transferred by means of the data and power transfer cable (6) via the electronic control unit (7). The electronic control unit (7) measures the amount of power drawn transiently by the micro heater (3) and includes said measurement into the calculation carried out by a mathematical model. Linear equations have been obtained according to different room types and clothing types between the power amount drawn and the operative temperature and these equations have been used in a mathematical model.

The joining and fixing of the parts in a Type 1 shell (10) along the confluence points (11) are carried out by means of a zip, laces or a magnetic holder.

## Claims

1. An operative temperature measuring device (1) which is an important factor in conditioning internal environments and which is used in measuring operative temperature that is dependent on the thermal interaction of the human body with its periphery, **characterized in that** it comprises;
• An ellipsoid sensor (2) wherein the inner section of the ellipsoid sensor (2) is filled with a fluid that can reflect the equivalent density of the internal organs, the inner body fluids and the average specific temperature of a human being which provides the simulation of the thermal characteristics of a human and the material and surface characteristics used besides simulating the human body geometry,
• At least an electric micro heater (3) which enables the simulation of the metabolic heat that the human body consumes during the thermal interaction of the human body with its periphery
• At least a surface temperature sensor (4) which measures surface temperature, and which can be placed onto one or more points on the ellipsoid sensor (2) and enables the measurement that is required in order to keep the temperature at fixed values that have been determined for different conditions,
• At least one telescopic leg (5) which enables the adjustment of the distance and angle between the sensor and the surface it is mounted on,
• At least a data and power transfer cable (6) formed of two different sections that perform power transfer and data transfer functions,
• An electronic control unit (7), which operates such that it can read the data received from the surface temperature sensor (4) and can control the electric micro heater (4), can obtain the operative temperature value by assigning the power data into the mathematical model and the obtained equations, and which can not only show these values on a screen (8) but can also transfer said values to a building automation system via wired and wireless communication protocols,
• A screen (8) located on the electronic control unit (7) which shows the room type control parameters and other control parameters,
• A control panel (9) which enables the adjustment of room type control parameters and other control parameters by means of the menu of the electronic control unit (7),
• A type 1 shell (10) formed of different thicknesses, materials and surfaces, which enable to carry out different sweating and clothing simulation by means of its structure that can be attached to and detached from the ellipsoid sensor (2), formed of a multi part structure comprising two or more slices that have been joined together by sewing or with any other kind of technique, or A type 2 shell (13) having a single part structure produced from a flexible textured material mounted on an ellipsoid sensor (2),
• A confluence point (11) which enable the joining of the parts of the two part, type 1 shell (10) and which travels the periphery of parts end to end,
• An inner surface of a type 1 shell (12) where the surfaces of the type 1 shell and the ellipsoid sensor (2) surfaces contact each other
• A type 2 shell inner surface (14) where the surfaces of the type 2 shell and the ellipsoid sensor (2) contact each other.

2. An operative temperature measuring device (1) according to claim 1, **characterized in that** the sensor (2) geometry has an ellipsoid structure that can represent the human body.

3. An operative temperature measuring device (1) according to claim 1, **characterized in that**, the surface temperature sensor (4) transfers the measurement data to the electronic control unit (7) via the power transfer cable (6)

4. An operative temperature measuring device (1) according to claim 1, **characterized in that**, the power which can enable the operation of the micro heater (3) if necessary is transferred via the electronic control unit (7) by means of the data and power transfer cable (6).

5. An operative temperature measuring device (1) according to claim 1, **characterized in that**, the electronic control unit (7) measures the power amount that has been transiently drawn by the micro heater (3) and includes said measurement into the calculation using a mathematical model.

6. An operative temperature measuring device (1) according to claim 1, **characterized by** obtaining linear equations according to different room types, activity levels and clothes between the power amount drawn by the micro heater (3) and the operative temperature by using said equations in a mathematical model.

7. An operative temperature measuring device (1) according to claim 1, **characterized in that**, the joining and fixing of the parts in a type 1 shell (10) along the confluence points (11) are performed by a zip, by laces or a magnetic holder.

## Patentansprüche

1. Betriebstemperaturmessvorrichtung (1), die ein wichtiger Faktor bei der Konditionierung von Innenräumen ist und zur Messung der Betriebstemperatur verwendet wird, die von der thermischen Wechselwirkung des menschlichen Körpers mit seiner Peripherie abhängig ist, **dadurch gekennzeichnet, dass** es umfasst;
• Ellipsoidsensor (2), wobei der innere Abschnitt des Ellipsoidsensors (2) mit einem Fluid gefüllt ist, das die äquivalente Dichte der inneren Organe, der inneren Körperflüssigkeiten und der durchschnittlichen spezifischen Temperatur eines Menschen reflektieren kann, was die Simulation der thermischen Eigenschaften eines Menschen und der Material- und Oberflächeneigenschaften ermöglicht, die neben der Simulation der menschlichen Körpergeometrie verwendet werden,
• Mindestens eine elektrische Mikroheizung (3), die die Simulation der metabolischen Wärme ermöglicht, die der menschliche Körper während der thermischen Interaktion des menschlichen Körpers mit seiner Peripherie verbraucht.
• Mindestens ein Oberflächentemperatursensor (4), der die Oberflächentemperatur misst und der an einem oder mehreren Punkten des Ellipsoidsensors (2) platziert werden kann und die Messung ermöglicht, die erforderlich ist, um die Temperatur auf festen Werten zu halten, die für verschiedene Bedingungen bestimmt wurden,
• Mindestens ein Teleskopbein (5), das die Einstellung des Abstands und Winkels zwischen dem Sensor und der Oberfläche, auf der er montiert ist, ermöglicht,
• Mindestens ein Daten und Energieübertragungskabel (6), das aus zwei verschiedenen Abschnitten besteht, die Energieübertragungs- und Datenübertragungsfunktionen ausführen,
• Eine elektronische Steuereinheit (7), die so arbeitet, dass sie die vom Oberflächentemperatursensor (4) empfangenen Daten lesen und die elektrische Mikroheizung (4) steuern kann, kann den Betriebstemperaturwert durch Zuordnung der Leistungsdaten in das mathematische Modell und die erhaltenen Gleichungen erhalten und diese Werte nicht nur auf einem Bildschirm (8) anzeigen, sondern auch über drahtgebundene und drahtlose Kommunikationsprotokolle an ein Gebäudeautomationssystem übertragen können,
• Ein Bildschirm (8), der sich auf der elektronischen Steuereinheit (7) befindet und die raumartigen Steuerungsparameter und andere Steuerungsparameter anzeigt,
• Steuertafel (9), die die Einstellung von raumartigen Steuerparametern und anderen Steuerparametern über das Menü der elektronischen Steuereinheit (7) ermöglicht,
• Eine Schale (10) vom Typ 1, die aus verschiedenen Dicken, Materialien und Oberflächen gebildet ist, die es ermöglicht, verschiedene Schweiß- und Kleidungssimulationen mittels ihrer Struktur, die an dem Ellipsoidsensor (2) befestigt und von diesem gelöst werden kann, gebildet aus einer mehrteiligen Struktur, die zwei oder mehr Scheiben umfasst, die durch Nähen oder mit einer anderen Art von Technik miteinander verbunden wurden, oder eine Schale (13) vom Typ 2 mit einer einteiligen Struktur, die aus einem flexiblen strukturierten Material hergestellt ist, das auf einem Ellipsoidsensor (2) montiert ist,
• Zusammenfließpunkt (11), der das Verbinden der Teile des zweiteiligen Teils, Typ 1 Schale (10), ermöglicht und der den Umfang der Teile von einem Ende zum anderen durchläuft,
• Eine Innenfläche einer Typ 1 Schale (12), bei der die Oberflächen der Typ 1 Schale und die Flächen des Ellipsoidsensors (2) einander berühren,
• Typ 2 Schaleninnenfläche (14), bei der die Oberflächen der Typ 2 Schale und des Ellipsoidsensors (2) einander berühren,

2. Betriebstemperaturmessvorrichtung (1) nach Anspruch 1, **dadurch gekennzeichnet, dass** die Geometrie des Sensors (2) eine elliptische Struktur aufweist, die den menschlichen Körper darstellen kann..

3. Betriebstemperaturmessvorrichtung (1) nach Anspruch 1, **dadurch gekennzeichnet, dass** der Oberflächentemperatursensor (4) die Messdaten über das Energieübertragungskabel (6) an die elektronische Steuereinheit (7) überträgt.

4. Betriebstemperaturmessvorrichtung (1) nach Anspruch 1, **dadurch gekennzeichnet, dass** die Leistung, die den Betrieb der Mikroheizung (3) bei Bedarf ermöglichen kann, über die elektronische Steuereinheit (7) mittels des Daten- und Energieübertragungskabels (6) übertragen wird.

5. Betriebstemperaturmessvorrichtung (1) nach Anspruch 1, **dadurch gekennzeichnet, dass** die elektronische Steuereinheit (7) die Leistungsmenge misst, die durch die Mikroheizung (3) transient entnommen wurde, und diese Messung in die Berechnung unter Verwendung eines mathematischen Modells einbezieht.

6. Betriebstemperaturmessvorrichtung (1) nach Anspruch 1, **gekennzeichnet durch dass** Erhalten linearer Gleichungen gemäß verschiedenen Raumtypen, Aktivitätsniveaus und Kleidungsstücken zwischen der durch den Mikroheizung (3) aufgenommenen Leistungsmenge und der Betriebstemperatur unter Verwendung der Gleichungen in einem mathematischen Modell.

7. Betriebstemperaturmessvorrichtung (1) nach Anspruch 1, **dadurch gekennzeichnet, dass** das Verbinden und Fixieren der Teile in einer Typ 1 Schale (10) entlang der Zusammenfließpunkte (11) durch einen Reißverschluss, durch Schnüre oder einen Magnethalter erfolgt.

## Revendications

1. Dispositif de mesure de température opérationnel (1) qui est un facteur important dans le conditionnement d'environnements internes et qui est utilisé pour mesurer la température opérationnelle qui dépend de l'interaction thermique du corps humain avec sa périphérie, **caractérisé en ce qu'**il comprend;
• Un capteur ellipsoïdal (2) dans lequel la section interne du capteur ellipsoïdal (2) est remplie avec un fluide qui peut refléter la densité équivalente des organes internes, les fluides corporels internes et la température spécifique moyenne d'un être humain qui permet de simuler les caractéristiques thermiques d'un être humain et les caractéristiques du matériau et de la surface utilisés en plus de la géométrie du corps humain,
• Au moins un micro chauffeur électrique (3) qui permet de simuler la chaleur métabolique que le corps humain consomme lors de l'interaction thermique du corps humain avec sa périphérie.
• Au moins un capteur de température de surface (4) qui mesure la température de surface et qui peut être placé en un ou plusieurs points du capteur ellipsoïdal (2) et permet la mesure nécessaire pour maintenir la température à des valeurs fixes qui ont été déterminées dans des conditions différentes,
• Au moins un pied télescopique (5) qui permet de régler la distance et l'angle entre le capteur et la surface sur laquelle il est monté,
• Au moins un câble de transfert de données et d'alimentation (6) formé de deux sections différentes qui assurent des fonctions de transfert d'alimentation et de transfert de données,
• Une unité de commande électronique (7), qui fonctionne de manière à pouvoir lire les données reçues du capteur de température de surface (4) et à commander le micro chauffeur électrique (4), peut obtenir la valeur de température opérationnelle en affectant les données de puissance au modèle mathématique et aux équations obtenues, et qui peut non seulement afficher ces valeurs sur un écran (8), mais aussi les transmettre à un système d'automatisation du bâtiment via des protocoles de communication câblés et sans fil,
• Un écran (8) situé sur l'unité de commande électronique (7) qui affiche les paramètres de commande du type de pièce et d'autres paramètres de commande,
• Un tableau de commande (9) qui permet le réglage des paramètres de régulation du type de pièce et d'autres paramètres de régulation au moyen du menu de l'unité de commande électronique (7),
• Un coque de type 1 (10) formée de différentes épaisseurs, matériaux et surfaces, qui permet d'effectuer différentes simulations de transpiration et de vêtements au moyen de sa structure qui peut être fixée et détachée du capteur ellipsoïdal (2), formée d'une structure en plusieurs parties comprenant deux ou plusieurs tranches qui ont été reliées ensemble par couture ou avec toute autre technique, ou Un coque de type 2 (13) ayant une structure monobloc réalisée à partir d'un matériau texturé flexible monté sur un capteur ellipsoïdal (2),
• Un point de confluence (11) qui permet l'assemblage des deux parties de la coque de type 1 (10) et qui parcourt la périphérie des pièces bout à bout,
• Une surface intérieure d'une coque de type 1 (12) où les surfaces de la coque de type 1 et les surfaces du capteur ellipsoïdal (2) sont en contact.
• Une surface intérieure de coque de type 2 (14) où les surfaces de la coque de type 2 et le capteur ellipsoïdal (2) sont en contact.

2. Dispositif de mesure de température opérationnel (1) selon la revendication 1, **caractérisé en ce que** la géométrie du capteur (2) présente une structure ellipsoïdale qui peut représenter le corps humain.

3. Dispositif de mesure de température opérationnel (1) selon la revendication 1, **caractérisé en ce que** le capteur de température de surface (4) transmet les données de mesure à l'unité de commande électronique (7) via le câble de transfert de puissance (6)

4. Dispositif de mesure de température opérationnel (1) selon la revendication 1, **caractérisé en ce que** la puissance qui peut permettre le fonctionnement du micro chauffeur (3) si nécessaire est transférée via l'unité de commande électronique (7) au moyen du câble de transfert de données et de puissance (6).

5. Dispositif de mesure de température opérationnel (1) selon la revendication 1, **caractérisé en ce que** l'unité de commande électronique (7) mesure la quantité de puissance qui a été tirée de manière transitoire par le micro chauffeur (3) et inclut ladite mesure dans le calcul en utilisant un modèle mathématique.

6. Dispositif de mesure de température opérationnel (1) selon la revendication 1, **caractérisé par** l'obtention d'équations linéaires selon différents types de pièces, niveaux d'activité et vêtements entre la quantité de puissance prélevée par le micro chauffeur (3) et la température opérationnelle en utilisant lesdites équations dans un modèle mathématique.

7. Dispositif de mesure de température opérationnel (1) selon la revendication 1, **caractérisé en ce que** l'assemblage et la fixation des pièces dans une coque de type 1 (10) le long des points de confluence (11) sont effectués par une fermeture éclair, par des lacets ou un support magnétique.
